# EUROPEAN PATENT SPECIFICATION

(11) **EP 0 705 783 B1**
(45) Date of publication and mention of the grant of the patent: **17.06.1998**
(21) Application number: 95114462.5
(22) Date of filing: 14.09.1995
(51) Int. Cl.: B65H 19/30, B65G 47/88

(54) **Method and assembly for stopping a set of rolls**
Verfahren und Vorrichtung zum Stoppen eines Satzes von Rollen
Méthode et dispositif pour arrêter un ensemble de rouleaux

(30) Priority: 21.09.1994 FI 944376
(43) Date of publication of application: 10.04.1996
(73) Proprietor: VALMET CORPORATION, 00620 Helsinki (FI)
(72) Inventor: Ruohio, Raimo, FIN-16800 Koski HL (FI); Hillo, Mauri, FIN-12240 Hikiä (FI)
(74) Representative: Zipse + Habersack

(56) References cited:
- EP-A- 0 554 700
- EP-A- 0 596 250
- AT-A- 332 214
- DD-A- 211 324
- DE-A- 3 811 159
- FR-A- 2 468 534
- FR-A- 2 682 053
- GB-A- 319 803
- US-A- 2 321 266
- US-A- 4 596 326
- US-A- 5 168 976
- IBM TECHNICAL DISCLOSURE BULLETIN, vol. 29, no. 8, January 1987 NEW YORK US, pages 3478-3480, NN. 'escapement mechanism using rotary actuators'
- PATENT ABSTRACTS OF JAPAN vol. 8 no. 32 (M-275) [1469] ,10 February 1984 & JP-A-58 188229 (TOYO KOGYO K.K.) 2 November 1983,
- PATENT ABSTRACTS OF JAPAN vol. 14 no. 545 (M-1054) ,4 December 1990 & JP-A-02 231314 (MITSUBISHI HEAVY IND LTD) 13 September 1990,

## Description

The present invention relates to a method according to the preamble of claim 1 for stopping a set of multiple rolls, often referred to in short as a set, in a controlled fashion.

The invention also concerns an apparatus according to the preamble of claim 8 suited for implementing the method.

In paper mills the web is manufactured in machine rolls having a width equal to the full web width, whereby the machine rolls must be slit into rolls of narrower width according to order prior to their delivery to the customer. Slitting is performed on a slitter in which the wider machine roll is unwound and the web is slit into narrower trimmed webs which are rewound again into rolls. The width of the rolls to be produced on the slitter is adjusted according to orders received from customers, and a single machine roll may conventionally be slit into rolls of different widths. The ready-wound rolls are ejected from the slitter onto a downward ramp, on which they roll down to a conveyor that takes the rolls to the wrapping area. The rolls leave the slitter at very close proximity, with the rolls ends almost abutting. However, the rolls must be somewhat outdistanced on the conveyor and at the wrapping stations. The rolls are arranged in a proper order and at proper mutual distances on the conveyor by separating the ready-slit rolls into sets. Each set comprises those rolls that are desired to be loaded sequentially onto the conveyor. The rolls slit from the machine roll are separated into sets either on the slitter, whereby the slitter separates the sets to both sides of the slitter, or alternatively, all rolls are ejected away from the slitter along a single downward ramp and then stopped by means of stop flaps placed on the downward ramp, whereby the flaps release the rolls to roll to the conveyor in a determined order. Similar handling needs occur also for roll sets received from other stations and, e.g., in the reception of roll sets transferred from rolls stores when the sets are being transferred down ramps. Hence, a set can be defined as such a set of rolls which is received from a slitter or other station already separated from each other but still requiring simultaneous stopping. The transfer of such a roll set may involve the use of car conveyors lifts or ramp systems.

Sets rolling down a ramp to a conveyor must obviously be stopped on the conveyor without causing damage to rolls. The stopping of a set is conventionally implemented with the help of downward retractable stop gage having a width equal to the full width of the entire set, or alternatively, with the help of a fixed, slanted stop gage. Both prior-art stopping methods have several shortcomings. For instance, when a roll leaving the ramp meets the slanted stop gage, the inertia of the roll will force it to proceed upward along the slanted surface of the gage and then again to roll back onto the ramp. The roll will continue its rolling back and forth until its kinetic energy will be exhausted and the roll stops on the conveyor. The oscillatory rolling motion causes damage to the roll and the web wound on the roll may break invisibly under the roll surface and cause unwinding of the roll if the glue bond of the roll tail fails. As a slitter may not necessarily involve continuous monitoring by the shift personnel, the defective rolls can easily reach the shipping system causing defect reports from that section of the line. Provided that the damage on the roll is found, the damaged layers are removed and the tail of the web is reattached to the roll using self-adhesive tape. The stopping situations of a set often involve a risk of injury particularly when manual stopping of a roll is attempted prior to the natural stopping of its oscillatory motion. The kinetic energy of a roll weighing several tons is extremely high even at slow speeds, and as a plurality of rolls exist on the ramp during the transfer phase, the risk of becoming knocked by the rolls is high. Manual stopping of the rolls may also be attempted to speed the operation of the line as the oscillatory motion of the rolls slows down the operating speed of the line.

A downward retractable, full-width stop gage is less frequently employed than a slanted stop gage. This type of stop gage is operated in the same fashion as the stop gages of the conveyor system. As the roll hits the stop gage, the gage retracts and simultaneously slows down the roll motion and finally stops the roll in a controlled fashion on the conveyor. However, these stops operate reliably with such roll weights for which they have been adjusted. Because the roll sizes incoming from the slitter vary widely, the function of the stop gage cannot be adjusted optimally. Yet, a more serious problem surpassing that involving the stop gage control arises from the nonsimultaneous arrival of the rolls on the stop gage. Then, the stop gage commences its retraction movement already at the hitting of the first roll on the gage, whereby the subsequent rolls hit a retracting or even stationary stop gage. If the end position of the roll braking motion of the stop gage is flush with the floor level, the rolls may continue rolling over and past the stop gage further along the floor of the mill. Hitting a stationary stop gage will readily damage the roll, whereby the web layers must be removed from the roll which results in a disturbance in the operation of the line. In the opposite case of insufficient line monitoring, defective rolls may be shipped to the customer. The differences in the rolling speed of the rolls on the ramp are caused by, i.a, the surface hardness differences between the individual rolls causing appreciable variation in the rolling speed of the rolls.

According to EP-A-0 554 700 the most common type of a roll stop gage is an arm pivotally mounted at its one end and adapted for motion control by means of a pneumatic cylinder. Such a roll stop operates so that along with its rolling motion, the roll hits a contact roll mounted to the distal end of the stop arm and begins to swing the arm toward the direction of the roll motion. Simultaneously, the arm actuates a pneumatic cylinder equipped with an outlet throttle valve at that side of the cylinder actuated during the braking of the roll motion. The throttling action slows down the cylinder stroke rate, as well as thereby also the roll motion, whereby the roll motion is brought to a halt.

FR-A-26 82 053 discloses a roll stop gage with an air-cushion bellow as the braking element but in connection with metallurgical installations.

It is an object of the present invention to achieve a method and an apparatus capable of stopping a set incoming from a slitter or similar station in a controlled fashion onto a conveyor without causing damage to the rolls.

The goal of the invention is accomplished by providing the downward ramp with a plurality of adjacent stop gages which can be controlled to their operating and home positions, respectively. A required number of the stop gages disposed along the rotating path of the roll is controlled to operate separately for each roll, while the rest of the stop gages are left in their home positions.

According to the most advantageous embodiment of the invention, the principle of the invention is implemented in conjunction with a slitter so that the downward ramp in front of the conveyor is provided with a number of adjacent stop gages, which can be controlled to either their operating or home positions. For each roll, a required number of the stop gages is selected to operate, while the rest of the stop gages are left in their home positions.

More specifically, the method according to the invention is characterized by what is stated in the characterizing part of claim 1.

Furthermore, the assembly according to the invention is characterized by what is stated in the characterizing part of claim 8.

The invention offers significant benefits.

The transfer of rolls by means of a downward ramp from a slitter or other station can be implemented in a controlled fashion irrespective of a wide size distribution of the rolls. The stopping force may be controlled in a variety of fashions by controlling the stop gages individually and varying the number of stop gages used for stopping a specific roll. As besides the roll width, also the roll diameter may vary, it is additionally necessary to control the stopping power of the stop gages so that rolls of different weight but of equal width can be stopped without causing damage to the rolls. Surface damage to the rolls is reduced, because the rolls are prevented from hitting fixed or stationary stop gages at a high speed. The function of stop gages performing the stopping of a specific roll is entirely independent from the function of the other stop gages. Selected stop gages can be lowered in their home positions flush with the floor level, whereby desired rolls may be allowed to pass over the conveyor, while the rest of the rolls can be stopped onto the conveyor. The individual stop gages have a design that provides satisfactory function even if the stopping force is incorrectly set for the roll size to be handled. Consequently, the risk of damage in conjunction with malfunction situations is reduced. The function of the stop gages can be readily controlled also manually, while the optimum controllability and most flexible function are achieved by connecting the stop gage system to the control computer of the slitter and the conveyor system. Then, the stopping effect and number of the stop gages can be set separately for each roll on the basis of roll information stored in the control system. The separating flaps presently in use can be replaced by the stop gage system according to the invention, whereby the rolls can be stopped smoothly also on the separating flaps.

In the following the invention is described in greater detail with reference to the appended diagrams in which
Figure 1 illustrates diagrammatically a set of rolls incoming from the slitter and a stop gage system according to the invention;
Figure 2 illustrates a stop gage according to the invention at the hitting instant of a roll against the stop; and

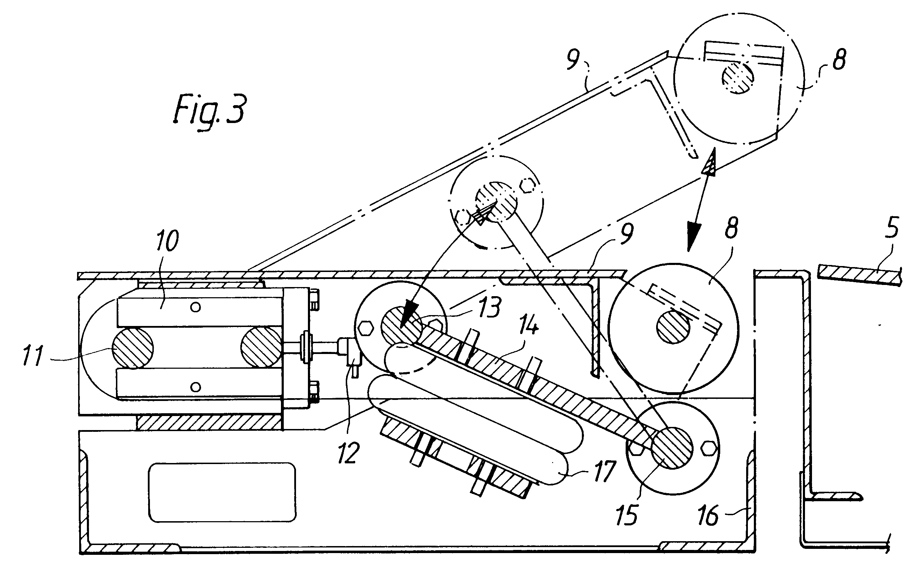

Figure 3 illustrates an enlarged detail of Fig. 2.

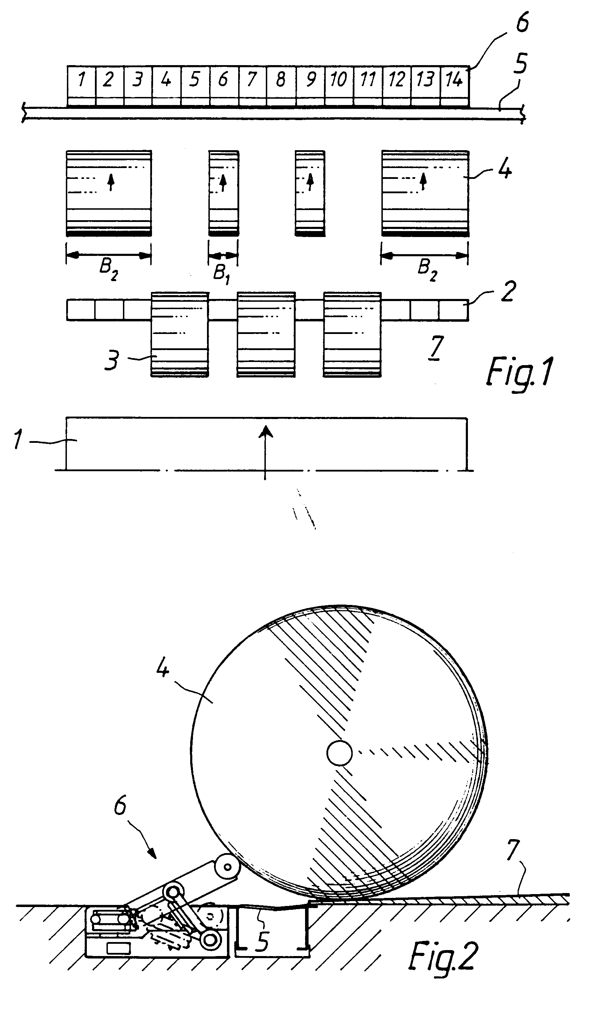

Referring to Fig. 1, the system according to the invention is illustrated adapted to a slitter 1 which is shown ejecting slit rolls 3, 4 to the same side of the slitter, while the invention can as well be adapted to such slitters that separate the rolls to the opposite sides of the station, and further, in conjunction with other such equipment in which the rolls are transferred along a downward ramp. The rolls 3, 4 rotate along a ramp 7 to separating flaps 2. The separating flaps 2 first stop the rolls 3, 4 onto the ramp 7 and then release a portion of the rolls to rotate further along the ramp to a conveyor 5. Half of the rolls are retained behind the separating flaps, while the other half is allowed to rotate further to the conveyor 5 behind which are located the set stop gages 6. In this case the number of the stop gages 6 is fourteen and they are numbered sequentially in Fig. 1 by consecutive numbers from 1 to 14.

The first set comprising rolls 4 has wide rolls at the sides and two narrow rolls at the center. The width of the individual stop gages 6 is selected so that the width of the stop gage 6 is equal to the width B₁ of the narrowest roll to be received from the slitter. Hence, the total width of the stop gage system is determined by the width of the rolls to be received from the slitter and by using a large number of narrow-width stop gages, the system may be made extremely flexible, while obviously the system price becomes higher when the number of stop gages is increased. Furthermore, it is advantageous to adapt the width of the stop gages 6 according to the width distribution of the rolls to be manufactured so that the roll widths will be an integral multiple of the width of the stop gages; however, this requirement is not by any means compelling, since the stop gages need not necessarily extend over the entire width of a roll.

Now referring to Fig. 2, the roll 4 is shown hitting the stop gage 6. The roll 4 first hits the stop gage at a roller 8 which is mounted on bearings on a moving lever 9. The opposite end of the lever 9 is adapted to slide supported by a pin 11 along a slot 10, and by means of a pivotal joint 13 to the center point of the lever 9 is attached a guide lever 14 whose other end is attached by means of a pivotal joint 15 to the stop gage body 16. Under the guide lever 14 is arranged an air-cushion bellows 17. The stop gage 6 is placed aside the conveyor 5 So that in its operating position the roll 8 is approximately aligned to the edge of the conveyor.

When a set of slit rolls 3, 4 is ejected away from the slitter 1, the number of individual stop gages and their location are selected in set cushion stop system so as to cope with the location and width of the rolls 4 in the set. The unselected stop gages are controlled into their home positions, whereby they remain flush with the floor level. Each stop gage may be adjusted pneumatically according to the minimum-size roll, whereby the stopping power for larger rolls is selected by controlling a greater number of stop gages to operate simultaneously in the stopping of the roll. In the situation illustrated in Fig. 1, the stop gages 1, 2, 3, 6, 9, 12, 13 and 14 are controlled to operate for stopping the rolls 4. For the stopping of rolls 3, the stop gages 4, 5, 7, 8, 10 and 11 are controlled to operate. The selection of the stop gages may be done manually from a control panel, or alternatively, the selection may be linked to the control of the slitter 1 or the separating flaps 2. The position signal of the separating flaps 2 is readily available, because the selection of the separating flaps 2 can be directly connected to the selection of the stop gages 6. The position of the stop gages is sensed by means of sensor 12 mounted on the slot 10.

AS the roll 4 hits the roller 8 of the stop gage, the lever 9 of the stop gage begins yielding backward along by the slot 10. The movement of the lever 9 and the roller 8 is controlled by the guide lever 14 so that the movement of the roller 8 is principally guided downward. The translational speed of the stop gage is controlled by means of the inflating pressure of the air-cushion bellows 17 located below the guide lever 14. The basic adjustment of bellows pressure may be, e.g., such that it provides suitable stopping power by the stop gage for the lightest rolls to be handled, and for rolls of larger width, a greater number of stop gages is activated to provide more stopping power. If the diameter of the rolls changes, the stopping power may be increased by elevating the inflation pressure of the air-cushion bellows. For a number of reasons, an air-cushion bellows is a particularly advantageouS device for generating the stopping power. For instance, the area of the bellows is large, whereby a high stopping power is achieved at a low pressure. A bellows is not sensitive to changes in roll size, because the stopping power generated by the bellows increases when the bellows volume is compressed, whereby the bellows automatically compensates for the impacts caused by oversize rolls, and even during a malfunction situation, the stop gage can receive the roll with a relatively gentle stopping action.

Obviously, other types of stop gages can be employed different from that described above. In principle, all conventional stop gage constructions are suited for the implementation of the method according to the invention, while such stop gages that can be controlled entirely flush with the floor level facilitate the transfer of rolls over the conveyor to the mill floor. The home and operating positions of the gage need not necessarily be different positions in the physical sense, but rather the stop gage may be controlled to its "home" position by adjusting the stopping power of the gage sufficiently low, whereby the gage will not brake down the movement of the roll. The stopping power may also be generated by electromechanical or hydraulic means, while the pneumatic means are preferred for their soft function. Further, the stopping power generated by pneumatic devices is easy to control.

The most typical application of the invention is in the stopping of a roll set incoming from a slitter to a conveyor. Obviously, the invention may be employed in other similar points of application. Equivalent stopping needs occur always when rolls are transferred along a ramp. The rolls to be transferred may be received from, e.g., another conveyor or a roll store. The linear row of stop gages according to the invention is capable of replacing stop flaps in a fashion that can stop the rolls on the downward ramp, whereby the braking-type stop gages provide a smoother and more controlled stopping than conventional separating flaps. By virtue of the smoother stopping, improved operational safety is achieved as the oscillatory motion of the rolls is eliminated, and simultaneously, higher rolling speeds can be used; that is, longer and steeper graded downward ramps can be used.

## Claims

1. A method of stopping a roll set being received from a slitter (1) or similar station, said roll set comprising a portion (4) of rolls (3, 4) slit from a machine roll by means of said slitter (1), or other similar roll set, being rolled along a downward ramp (7), with a stop gage (6) stopping the rolls by slowing down their motion, **characterized** in that
- selecting for each roll (4) from the roll set to be stopped from a line of multiple stop gages (6) adapted in conjunction with the downward ramp (7) for an operating position at least one stop gage (6) disposed along the path of said roll (4),
- setting the other stop gages (6) to their home positions, and
- stopping the rolls (4) approaching the line of stop gages (6) onto a conveyor (5) by slowing down their motion by means of the selected stop gages (6).

2. A method as defined in claim 1, **characterized** by stopping the rolls (4) onto the conveyor (5) with the help of the line of stop gages (6) which is disposed on the opposite side of the conveyor (5) in relation to the downward ramp (7) which is situated in conjunction with the slitter (1) and has the lower end of the ramp ending at the conveyor.

3. A method as defined in claim 1 or 2 , **characterterized** by controlling the stopping power separately for each roll by varying the number of operated stop gages (6).

4. A method as defined in claim 1 or 2, **characterized** by controlling the stopping power separately for each roll by varying the braking power of each stop gage (6) separately.

5. A method as defined in claim 1 or 2, **characterized** by controlling the stopping power for each roll by varying both the number of operated stop gages (6) and the braking power of each stop gage separately.

6. A method as defined in any foregoing claim, in which method rolls (3, 4) arriving from the slitter (1) are separated into roll sets by means of separating flaps (2) disposed on the downward ramp (7), **characterized** by selecting the operated stop gages (6) on the basis of the position of the separating flaps (2).

7. A method as defined in any foregoing claim 1-4, in which method rolls (3, 4) arriving from the slitter (1) are separated into roll sets on the slitter (1) by guiding the rolls to both sides of the slitter (1), **characterized** by selecting the operated stop gages (6) on the basis of the control information obtained from the slitter (1).

8. An assembly for stopping a roll set being received from a slitter (1) or similar station in a system comprising at least one downward ramp (7) with a stop gage (6) stopping the rolls by slowing down their motion, and an actuator for feeding the rolls onto the downward ramp (7), **characterized** by a line of multiple stop gages (6) adapted in conjunction with the downward ramp (7), the stop gages being controllable to a home position and an operating position so that along the path of the roll (4) to be stopped is disposed at least one stop gage (6) suited for controlled operation.

9. An assembly as defined in claim 8 in a system comprising the slitter (1), the at least one downward ramp (7) disposed aside the slitter (1) and a conveyor (5) disposed at the lower end of the downward ramp (7), **characterized** by the line of multiple stop gages (6) adapted to the opposite side of the conveyor (5) in relation to the downward ramp (7), said stop gages being controllable to the home position and the operating position, respectively, so that along the rotating path of the roll (4) to be stopped is disposed at least one stop gage (6) suited for controlled operation.

10. An assembly as defined in claim 8 or 9, **characterized** in that the width of the individual stop gages (6) is selected according to the width of the narrowest roll.

11. An assembly as defined in claim 8-10, said assembly comprising a body (16) and a stop lever (9) having a roller (8) mounted to the end thereof, **characterized** in that
- the opposite end of the lever (9) in relation to the roller (8) is adapted to the body (16) by means of a linear glide element (10, 11),
- approximately to the center point of the lever (9) is mounted by means of a pivotal joint (13) a guide lever (14) whose opposite end is connected by a pivotal joint (15) to the body (16), and
- under the guide lever (14) is disposed an aircushion bellows (17) provided with adjustable inflation pressure for controlling the stopping power.

12. An assembly as defined in any of claims 8-11, **characterized** in that said stop gages (6) are disposed on the mill floor so that their home positions are entirely flush with the floor level, or alternatively, below it.

## Patentansprüche

1. Verfahren zum Stoppen eines von einem Rollenschneider (1) oder einer ähnlichen Station aufgenommenen Rollensatzes, der einen Teil (4) von Rollen (3, 4) umfaßt, die durch den Rollenschneider (1) von einer Maschinenrolle aufgeteilt wurden, oder eines ähnlichen Rollensatz, der entlang einer abschüssigen Rampe (7) gerollt wird, mit einem Stop-Justierer (6), der die Rollen durch Verlangsamung ihrer Bewegung stoppt,
**gekennzeichnet durch** folgende Verfahrensschritte:
- für jede Rolle (4) des zu stoppenden Rollensatzes wird für eine Betriebsstellung aus einer Reihe mehrerer Stop-Justierer (6), die in Verbindung mit der abwärts geneigten Rampe (7) angeordnet sind, mindestens ein Stop-Justierer (6) ausgewählt, der im Weg der Rolle (4) angeordnet ist,
- die anderen Stop-Justierer (6) werden in ihre Ruhestellung gesetzt, und
- die sich der Reihe der Stop-Justierer (6) annähernden Rollen (4) werden auf einem Fördergerät (5) durch Verlangsamung ihrer Bewegung durch die ausgewählten Stop-Justierer (6) gestoppt.

2. Verfahren nach Anspruch 1, **gekennzeichnet durch** das Stoppen der Rollen (4) auf dem Fördergerät (5) mit Hilfe der Reihe von Stop-Justierern (6), die auf der gegenüberliegenden Seite des Fördergerätes (5) bezüglich der abschüssigen, in Verbindung mit dem Rollenschneider (1) vorgesehenen Rampe (7) angeordnet ist, deren unteres Ende an dem Fördergerät endet.

3. Verfahren nach Anspruch 1 oder 2, **gekennzeichnet durch** die separate Steuerung der Stopkraft für jede Rolle durch Änderung der Anzahl der betätigten Stop-Justierer (6).

4. Verfahren nach Anspruch 1 oder 2, **gekennzeichnet durch** die separate Steuerung der Stopkraft für jede Rolle durch separate Änderung der Bremskraft jedes Stop-Justierers (6).

5. Verfahren nach Anspruch 1 oder 2, **gekennzeichnet durch** die Steuerung der Stopkraft für jede Rolle durch Änderung sowohl der Anzahl der betätigten Stop-Justierer (6) als auch der Bremskraft separat für jeden Stop-Justierer.

6. Verfahren nach einem der vorhergehenden Ansprüchen, bei dem die von dem Rollenschneider (1) ankommenden Rollen (3, 4) durch auf der abschüssigen Rampe (7) angeordnete Trennklappen (2) in Rollensätze aufgeteilt werden, **gekennzeichnet durch** die Auswahl der betätigten Stop-Justierer (6) aufgrund der Position der Trennklappen (2).

7. Verfahren nach einem der vorhergehenden Ansprüche 14, bei dem die von dem Rollenschneider (1) ankommenden Rollen (3, 4) auf dem Rollenschneider (1) durch Führung der Rollen zu beiden Seiten des Rollenschneiders (1) in Rollensätze aufgeteilt werden, **gekennzeichnet durch** die Auswahl der betätigten Stop-Justierer (6) aufgrund der von dem Rollenschneider (1) erhaltenen Steuerinformationen.

8. Anlage zum Stoppen eines von einem Rollenschneider (1) oder einer ähnlichen Station erhaltenen Rollensatzes in einem System, das mindestens eine abschüssige Rampe (7) mit einem die Rollen durch Verlangsamung ihrer Bewegung stoppenden Stop-Justierer (6) und ein Betätigungsglied zur Zuführung der Rollen auf die abschüssige Rampe (7) aufweist, **gekennzeichnet durch** eine Reihe von mehreren, in Verbindung mit der abschüssigen Rampe (7) angeordneten Stop-Justierern (6), die in eine Ruhestellung und eine Betriebsstellung steuerbar sind, so daß entlang des Wegs der zu stoppenden Rolle (4) mindestens ein Stop-Justierer (6) zum gesteuerten Betrieb angeordnet ist.

9. Anlage nach Anspruch 8 in einem System umfassend den Rollenschneider (1), mindestens die neben dem Rollenschneider angeordnete abschüssige Rampe (7) und ein an dem unteren Ende der abschüssigen Rampe (7) angeordnetes Fördergerät (5) (5), **gekennzeichnet durch** die Reihe von mehreren Stop-Justierern (6), die an der bezüglich der abschüssigen Rampe (7) gegenüberliegenden Seite des Fördergeräts (5) angeordnet ist, wobei die Stop-Justierer in die Ruhestellung beziehungsweise in die Betriebsstellung steuerbar sind, so daß entlang des Rollwegs der zu stoppenden Rolle (4) mindestens ein Stop-Justierer (6) für einen gesteuerten Betrieb angeordnet ist.

10. Anlage nach Anspruch 8 oder 9, **dadurch gekennzeichnet,** daß die Breite der einzelnen Stop-Justierer (6) entsprechend der Breite der schmalsten Rolle ausgewählt ist.

11. Anlage nach Anspruch 8-10, umfassend einen Körper (16) und einen Stop-Hebel (9) , an dessen Ende eine Rolle (8) montiert ist, **dadurch gekennzeichnet,** daß
- das bezüglich der Rolle (8) gegenüberliegende Ende des Hebels (9) durch ein lineares Gleitelement (10, 11) an den Körper (16) angelenkt ist,
- ungefähr an dem Mittelpunkt des Hebels (9) durch ein Drehgelenk (13) ein Führungshebel (14) befestigt ist, dessen gegenüberliegendes Ende durch ein Drehgelenk (15) mit dem Körper (16) verbunden ist und
- unter dem Führungshebel (14) ein Luftkissenbalg (17) mit einem einstellbaren Fülldruck zur Steuerung der Stopkraft angeordnet ist.

12. Anlage nach einem der Ansprüche 8-11, **dadurch gekennzeichnet,** daß die Stop-Justierer (6) auf dem Fabrikboden angeordnet sind, so daß ihre Ruhestellung vollständig bündig mit der Bodenebene oder alternativ darunter liegt.

## Revendications

1. Méthode d'arrêt d'un ensemble de rouleaux reçus en provenance d'un appareil de fendage (1) ou d'une station similaire, ledit ensemble de rouleaux comprenant une portion (4) de rouleaux (3,4) fendus à partir d'un rouleau de machine au moyen dudit appareil de fendage (1), ou un autre ensemble de rouleaux similaires, qui roulent le long d'une rampe descendante (7), avec un gabarit d'arrêt (6) qui arrête les rouleaux par ralentissement de leur mouvement,
caractérisée en ce que :
on choisit,pour chaque rouleau (4) de l'ensemble de rouleaux à arrêter, dans une ligne de gabarits d'arrêt multiples (6) agencés en association avec la rampe descendante (7) pour une position de fonctionnement, au moins un gabarit d'arrêt (6) disposé le long du chemin du dit rouleau (4),
on fixe les autres gabarits d'arrêt (6) à leurs positions inactives, et
on arrête les rouleaux (4) qui s'approchent de la ligne de gabarits d'arrêt (6) sur un convoyeur (5) par ralentissement de leur mouvement au moyen des gabarits d'arrêt choisis (6).

2. Méthode suivant la revendication 1, caractérisée en ce qu'on arrête les rouleaux (4) sur le convoyeur (5) à l'aide de la ligne de gabarits d'arrêt (6) qui est disposée du côté opposé du convoyeur (5) par rapport à la rampe descendante (7) qui est située en conjonction avec l'appareil de fendage (1) et dont l'extrémité inférieure de la rampe se termine au convoyeur.

3. Méthode suivant la revendication 1 ou 2, caractérisée en ce qu'on règle la puissance d'arrêt séparément pour chaque rouleau, par modification du nombre des gabarits d'arrêt actionnés (6).

4. Méthode suivant la revendication 1 ou 2, caractérisée en ce qu'on règle la puissance d'arrêt séparément pour chaque rouleau par modification de la puissance de freinage de chaque gabarit d'arrêt (6) séparément.

5. Méthode suivant la revendication 1 ou 2, caractérisée en ce qu'on règle la puissance d'arrêt pour chaque rouleau par modification à la fois du nombre de gabarits d'arrêt actionnés (6) et de la puissance de freinage de chaque gabarit d'arrêt séparément.

6. Méthode suivant une quelconque des revendications précédentes, dans laquelle les rouleaux (3,4) arrivant de l'appareil de fendage (1) sont séparés en ensembles de rouleaux au moyen de volets de séparation (2) disposés sur la rampe descendante (7), caractérisée en ce qu'on choisit les gabarits d'arrêt actionnés (6) sur la base de la position des volets de séparation (2).

7. Méthode suivant une quelconque des revendications 1 à 4, dans laquelle les rouleaux (3,4) arrivant de l'appareil de fendage (1) sont séparés en ensembles de rouleaux sur l'appareil de fendage (1) par guidage des rouleaux vers les deux côtés de l'appareil de fendage (1), caractérisée en ce qu'on choisit les gabarits d'arrêt actionnés (6) sur la base des informations de commande fournies par l'appareil de fendage (1).

8. Dispositif d'arrêt d'un ensemble de rouleaux reçus en provenance d'un appareil de fendage (1) ou d'une station similaire dans un système comprenant au moins une rampe descendante (7) pourvue d'un gabarit d'arrêt (6) qui arrête les rouleaux par ralentissement de leur mouvement, et un actionneur pour amener les rouleaux sur la rampe descendante (7), caractérisé en ce qu'il comprend une ligne de gabarits d'arrêt multiples (6) prévus en association avec la rampe descendante (7), des gabarits d'arrêt pouvant être amenés à une position inactive et à une position de travail de sorte que, le long du chemin du rouleau (4) à arrêter, il y a au moins un gabarit d'arrêt (6) convenant pour un fonctionnement contrôlé.

9. Dispositif suivant la revendication 8, dans un système comprenant l'appareil de fendage (1), ladite au moins une rampe descendante (7) placée à côté de l'appareil de fendage (1) et un convoyeur (5) placé à l'extrémité inférieure de la rampe descendante (7), caractérisé en ce que la ligne de gabarits d'arrêt multiples (6) est placée du côté opposé du convoyeur (5) par rapport à la rampe descendante (7), lesdits gabarits d'arrêt pouvant être amenés à la position inactive et à la position de travail, respectivement, de sorte que, le long du chemin de rotation du rouleau (4) à arrêter, il y a au moins un gabarit d'arrêt (6) convenant pour un fonctionnement contrôlé.

10. Dispositif suivant la revendication 8 ou 9, caractérisé en ce que la largeur des gabarits d'arrêt individuels (6) est choisie en fonction de la largeur du rouleau le plus étroit.

11. Dispositif suivant une quelconque des revendications 8 à 10, ledit dispositif comprenant un corps (16) et un levier d'arrêt (9) à l'extrémité duquel est monté un galet (8), caractérisé en ce que :
l'extrémité opposée du levier (9) par rapport au galet (8) est fixée au corps (16) par l'intermédiaire d'un élément de glissière linéaire (10,11),
approximativement au centre du levier (9) est monté, au moyen d'une articulation pivotante (13), un levier de guidage (14) dont l'extrémité opposée est reliée par une articulation pivotante (15) au corps (16), et
sous le levier de guidage (14) est disposé un soufflet à coussin d'air (17)ayant une pression de gonflage réglable pour commander la puissance d'arrêt.

12. Dispositif suivant une quelconque des revendications 8 à 11, caractérisé en ce que lesdits gabarits d'arrêt (6)-sont disposés sur le plancher de l'usine de sorte que leurs positions inactives sont entièrement en affleurement avec le niveau du plancher ou, en variante, au-dessous de celui-ci.
